## Europäisches Patentamt
## European Patent Office
## Office européen des brevets

(11) Numéro de publication: **0 1 1 7 1 8 1**
**B1**

(12) **FASCICULE DE BREVET EUROPEEN**

(45) Date de publication du fascicule du brevet:
**13.05.87**

(21) Numéro de dépôt: **84400200.6**

(22) Date de dépôt: **30.01.84**

(51) Int. Cl.⁴: **H 04 M 15/00, H 04 M 15/10**

(54) Procédé de taxation pour la vente d'informations par téléphone.

(30) Priorité: **04.02.83 FR 8301775**

(43) Date de publication de la demande:
**29.08.84 Bulletin 84/35**

(45) Mention de la délivrance du brevet:
**13.05.87 Bulletin 87/20**

(84) Etats contractants désignés:
**BE DE GB IT NL SE**

(56) Documents cités:
**DE - A - 2 942 348**
**DE - B - 1 195 367**
**US - A - 4 165 446**

**PATENTS ABSTRACTS OF JAPAN, vol. 3, no. 156, 21 décembre 1979, page 35E161**
**PATENTS ABSTRACTS OF JAPAN, vol. 2, no. 42, 20 mars 1978, page 385E78**

(73) Titulaire: **Bernard, Alain, 4Bis, rue Alexandre Bontemps, F-78000 Versailles (FR)**
Titulaire: **Dupraz, Didier, 4, rue Denfert Rochereau, F-92600 Asnieres (FR)**

(72) Inventeur: **Bernard, Alain, 4Bis, rue Alexandre Bontemps, F-78000 Versailles (FR)**
Inventeur: **Dupraz, Didier, 4, rue Denfert Rochereau, F-92600 Asnieres (FR)**

(74) Mandataire: **Mongrédien, André et al, c/o BREVATOME 25, rue de Ponthieu, F-75008 Paris (FR)**

## Description

La présente invention a pour object un procédé de taxation pour la vente d'informations par téléphone.

La vente d'informations par téléphone s'effectue aujourd'hui selon plusieurs procédés. Selon un premier procédé, un demandeur appelle, par sa ligne téléphonique, un organisme fournisseur d'informations, avec lequel il a souscrit un abonnement. L'appel est reçu par un opérateur qui, avant toute chose, identifie le demandeur, soit en le rappelant par téléphone, soit en lui faisant énoncer un code confidentiel d'accès (mot de passe ou numéro). Ce code confidentiel est communiqué au client en échange du règlement de son abonnement ou de l'ouverture d'un compte de débit. Une fois l'identité du demandeur vérifiée, l'information souhaitée est fournie au client par un expert ayant accès à une documentation manuelle ou informatisée. Le message transmis au client a une durée quelconque, qui dépend naturellement de la nature de l'information recherchée.

Un tel processus présente des inconvénients dans la mesure où l'identification des demandeurs, la tenue à jour des comptes clients, la gestion des codes d'accès et des abonnements, sont des tâches longues, fastidieuses et onéreuses.

D'autres procédés de distribution d'informations sont connus, qui mettent en œuvre des moyens automatiques appelés banques de données ou serveurs. Dans ces systèmes, le demandeur est mis en rapport avec un ordinateur. Celui-ci déclenche tout d'abord une opération d'identification et ce n'est qu'ensuite qu'il autorise l'opération d'interrogation de la banque de données.

Ces deux opérations particulières, respectivement d'identification et d'interrogation, nécessitent la mise en œuvre d'un terminal de téléinformatique spécifique, capable d'émettre, sur une ligne téléphonique, sans coupure de la communication, des codes spéciaux aptes à être reconnus par l'ordinateur. L'accès à l'information n'est donc possible qu'aux usagers dotés d'un tel terminal.

En pratique, ce genre de service ne touche donc qu'une faible partie des abonnés au téléphone, ce qui n'est guère satisfaisant.

Si l'on veut étendre à tous les abonnés du téléphone l'accès à un serveur d'information, il faut, compte tenu de la structure actuelle des terminaux téléphoniques les plus répandus:

– que cette information soit fournie sous forme parlée,

– qu'elle soit gratuite, c'est-à-dire que le serveur ne cherche pas à faire payer le demandeur,

– ou, si elle n'est pas gratuite, que le demandeur puisse s'identifier simplement.

Ces difficultés de taxation lors de la vente d'informations expliquent en partie que certains organismes préfèrent donner ces informations à titre gratuit. C'est le cas notamment pour les informations concernant l'état des routes, la météorologie, etc...

Mais il existe aussi des services où la facturation est établie de manière simplifiée et forfaitairement. C'est le cas, en France, par exemple, pour le service d'informations téléphonées accessible en formant le 12 (ou le 12.12).

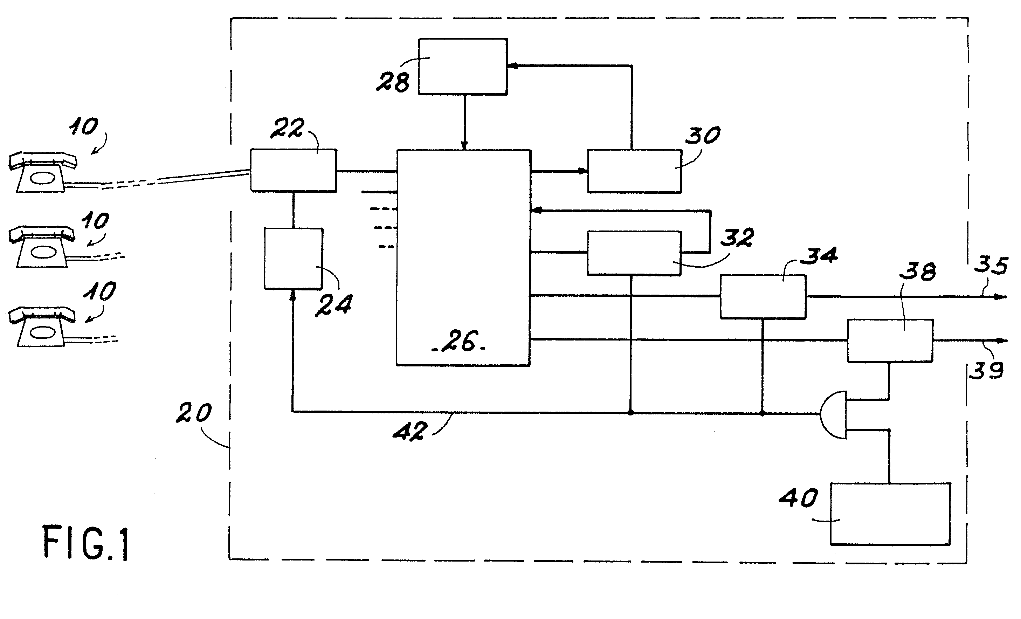

Le schéma de la figure 1 permet de préciser la structure des systèmes de ce genre. Tel que représenté (de manière simplifiée pour n'évoquer que les organes intervenant plus ou moins directement dans l'opération de taxation), le système comprend des postes d'abonnés 10, un autocommutateur 20 comprenant des équipements d'abonnés 22, des compteurs 24 associés à ces équipements, un réseau de connexion 26, une unité de commande 28, un récepteur de numérotation 30 et des joncteurs.

Ceux-ci sont de trois types: un joncteur local 32, servant aux communications locales, un joncteur de renseignements 34, relié à une ligne d'opératrice 35 et un joncteur de circuits 38, relié aux lignes extérieures 39, ce dernier joncteur étant associé à une minuterie 40. Ces joncteurs sont reliés à chaque compteur d'abonnés 24 par un fil de taxation 42.

Le fonctionnement de ce système est le suivant. Lorsqu'un abonné décroche, son équipement 22 l'identifie et l'information est transmise à l'unité de commande 28 qui met en service, par l'intermédiaire du réseau de connexion 26, le récepteur de numérotation 30. Celui-ci reçoit la numérotation émise par le demandeur, l'envoie à l'unité de commande 28 qui, reconnaissant le numéro des renseignements (le 12 ou le 12.12) ordonne au réseau de connexion 26 de relier l'équipement d'abonné 22, non pas au joncteur local 32, ni au joncteur de circuit 38, mais au joncteur de renseignements 34. C'est donc ce dernier qui envoie au compteur 24 de l'équipement d'abonné l'ordre adéquat de taxation. Il s'agit d'une taxation dite «au quantum» qui correspond à deux unités de taxation imputées dès le début de la communication.

On observera que le joncteur local 32, lorsqu'il est sollicité, ne déclenche qu'une seule unité de taxation et cela quelle que soit la durée de la communication; le joncteur de circuit 38 déclenche lui, une taxation qui est fonction de la distance entre abonnés et de la durée de la communication et cela grâce à la minuterie 40 qui définit les paliers de taxation à retenir et qui compte le nombre de ces paliers.

Un tel système a donc pour but de faire progresser de deux unités le contenu du compteur de l'abonné demandeur, lorsque celui-ci est mis en rapport avec une opératrice de renseignements alors que, pour une communication locale, ce compteur n'aurait progessé que d'une seule unité. Il y a donc une surtaxe forfaitaire d'une unité.

Un tel service ne souffre pas des inconvénients soulignés plus haut puisque le service offert par le centre de renseignements est taxé en fonction de la consommation de chaque abonné, sans que celui-ci ait besoin de disposer d'un terminal spécial, l'identification se faisant automatiquement par le numéro d'appel de l'abonné. En outre, la facturation du service rendu est aisée et n'entraîne aucun

2

frais spécifique pour les services d'administration du réseau.

Cependant, un tel système présente encore des inconvénients:

– il nécessite que soient prévus, dans chaque central téléphonique, des joncteurs spéciaux (comme les joncteurs 34) capables de commander les compteurs d'abonnés de manière appropriée; or de tels joncteurs sont coûteux,

– le serveur d'informations n'est pas rémunéré puisque le montant des taxes qui correspond au service rendu est inclus dans la facturation générale adressée à l'abonné et ne se distingue pas du montant des taxes de communications ordinaires.

La présente invention a justement pour objet un procédé de taxation qui évite ces inconvénients. Ce résultat est obtenu, selon l'invention, essentiellement par les opérations suivantes:

– on donne aux messages d'informations une durée fixe, qui est déterminée en fonction des périodes de taxation des abonnés ayant accès au service d'information, la durée des messages occupant plus d'un palier de taxation,

– on effectue un comptage du nombre d'appels du serveur,

– on effectue une taxation à la durée en utilisant les moyens habituellement prévus pour une telle taxation.

Avec un tel procédé, d'une part la taxation à la durée d'un message qui occupe plus d'une période de taxation permet de créer une surtaxe et, d'autre part, le comptage du nombre d'appels permet de calculer le nombre de surtaxes perçues et par conséquent la part de la facturation qui revient au serveur.

On observera que ces avantages sont obtenus selon l'invention, sans modification des èquipements existants, qui, tous possèdent des moyens de taxation à la durée. Il suffit donc de prévoir un routage particulier pour les communications entre les abonnés demandeurs et le serveur à travers ces moyens de taxation à la durée et de prévoir dans le serveur, un compteur d'appels.

On notera qu'il existe déjà des serveurs d'informations qui délivrent des messages de durée déterminée. Mais ces serveurs délivrent leur message de manière cyclique ininterrompue. Dans ce genre de système, lorsque le demandeur entre en contact avec le serveur, il reçoit un message qui est déjà en cours de diffusion. Il doit donc attendre la prochaine diffusion pour compléter le message par son début. Il y a donc une incertitude sur la durée pendant laquelle le demandeur reste connecté au serveur, celle-ci pouvant atteindre près de deux fois la durée du message. Pour réaliser l'invention il faut donc utiliser un serveur spécial. Ce serveur ne délivre pas son message en permanence, mais seulement en cas d'appel. Le demandeur reçoit donc l'information dans un ordre chronologique normal. Des serveurs, qui peuvent alimenter plusieurs lignes téléphoniques en parallèle, existent. Il s'agit, en général, de dispositifs comprenant une mémoire de mots constituée d'un ensemble de registres à décalage rebouclés sur eux-mêmes, chaque registre pouvant délivrer un mot à des intervalles de temps égaux ou supérieurs au temps nécessaire pour qu'il se vide et se recharge.

Les caractéristiques de l'invention apparaîtront mieux après la description qui suit, d'exemples de réalisation donnés à titre explicatif et nullement limitatif, en référence à des dessins annexés qui font suite à la figure 1 déjà décrite et sur lesquels:

– la figure 2 illustre un exemple de réseau téléphonique permettant de mettre en œuvre le procédé de l'invention,

– la figure 3 est un diagramme illustrant le principe de la taxation utilisée dans l'invention.

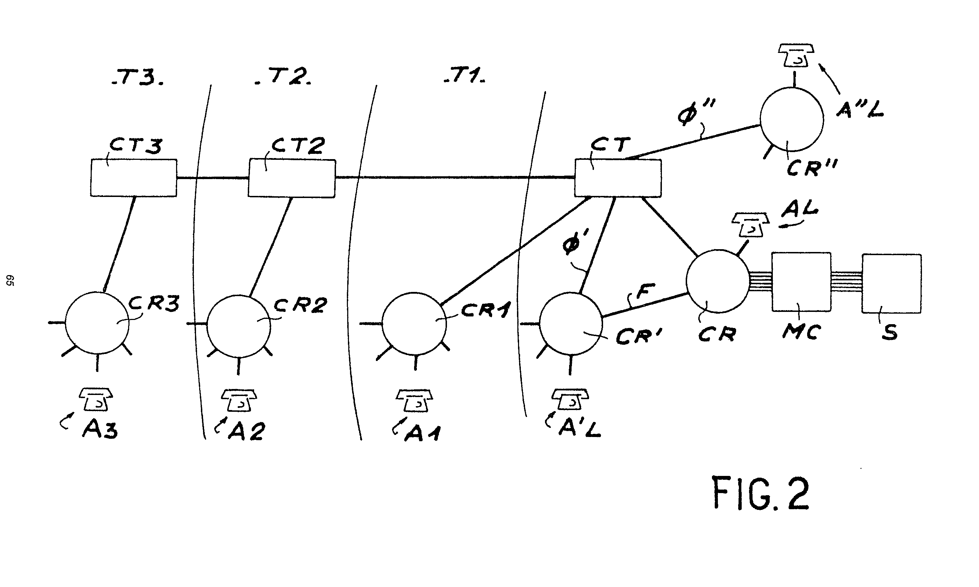

Le principe de l'invention peut être exposé plus en détail en considérant tout d'abord le cas simple où l'abbonné demandeur et le serveur sont situés dans une même zone locale de distribution, c'est-à-dire dans une zone où la taxation des communications entre abonnés se fait à la communication, et non à la durée. Une telle zone locale comprend, par exemple, et comme illustré sur la partie droite de la figure 2, des centres de rattachement (par exemple du genre commutateurs à autonomie d'acheminement) CR, CR', CR'', un serveur S, une machine de comptage MC et un centre de transit CT permettant l'acheminement vers d'autres zones situées sur la partie gauche de la figure et qui seront prises en compte plus loin.

Certains centres de rattachement sont reliés entre eux par des faisceaux directs. C'est le cas de CR et CR' reliés par le faisceau F. Les abonnés rattachés aux centres CR' et CR'' sont désignés respectivement par A'$_L$ et A''$_L$ (l'indice L soulignant le caractère local de l'abonné). Le serveur est rattaché au centre CR qui possède lui aussi ses propres abonnés A$_L$. Les centres de rattachement ne possèdent pas de joncteurs permettant de mettre en œuvre une taxation à la durée, puisque, d'un commutateur à l'autre, on reste dans la même zone locale.

Certains commutateurs (CR', CR'' sont reliés au centre de transit CT par des faisceaux $\emptyset$', $\emptyset$''. Un tel centre de transit est muni de moyens de comptage mixte (à la communication et à la durée). C'est donc à travers lui que devront être acheminées les communications entre les abonnés demandeurs d'informations et le serveur, même s'il existe un faisceau direct entre le commutateur auquel est rattaché l'abonné demandeur et le commutateur de rattachement du serveur (ce qui est le cas par exemple pour les abonnés A'$_L$).

Ce routage particulier est obtenu en affectant au serveur d'informations un numéro d'appel spécial. Dans le plan de numérotage français classique, un numéro contient un préfixe BPQ qui définit l'acheminement et la taxation. Ce préfixe est suivi de quatre chiffres MCDU qui sont les chiffres des milliers, des centaines, des dizaines et des unités. Le groupe BPQ permet justement le routage correct à travers le centre de transit CT, autrement dit à travers les moyens permettant la taxation à la durée. Pour cela, le BPQ du serveur est considéré, par les différents organes de commutation du réseau téléphonique utilisé, comme devant nécessiter un routage par les moyens en question.

On sait que dans la taxation à la durée, une unité de taxation (ou taxe de base) est imputée au demandeur au début de la communication, dès que le demandé a décroché; une autre unité est ensuite imputée toutes les T secondes, T désignant une période de taxation déterminée fonction de la distance et appelée par la suite palier de taxation. Le groupe BPQ affecté au serveur est signalé à tous les centraux comme devant être considéré comme soumis à une telle taxation à la durée (bien que, comme on l'a compris, l'abonné demandeur soit situé dans la même zone locale que le serveur).

Le message délivré par le serveur possède, selon l'invention, une durée constante qui est choisie supérieure à ce palier de taxation, de telle sorte que le montant de la taxe totale imputée au demandeur pour la réception de la totalité du message soit d'au moins deux unités. Ce montant comprend donc une surtaxe d'au moins une unité par rapport à la taxe qui aurait été imputée au demandeur pour une communication avec un abonné situé dans ladite zone locale, par exemple avec un abonné $A_L$. Par comptage (dans une période définie qui peut être le mois, le bimestre, le trimestre, etc...) du nombre d'appels auxquels le serveur a répondu, on détermine le nombre de surtaxes correspondant à la fourniture des informations, donc la part à restituer au serveur.

Les paliers de taxation peuvent présenter plusieurs valeurs selon la période d'utilisation, ce qui est le cas en France selon que la communication est établie de jour ou de nuit. La période de jour est égale à la moitié de la période de nuit. On considèrera alors la plus grande des deux valeurs pour fixer la durée minimale du message. Par exemple, pour un palier de 120s de jour et de 240s de nuit, on donnera au message une durée supérieure à 240s et par exemple une durée comprise entre 240 et 360s. De cette manière, l'abonné qui a reçu le message sera imputé de deux taxes la nuit et de trois taxes le jour.

Le comptage effectué au niveau du serveur devra naturellement distinguer les appels de jour et les appels de nuit pour que, dans le décompte total des taxes dues par les abonnés, la part de surtaxe due au serveur soit correctement déterminée.

Comme la précision des minuteries servant au décompte des taxes n'est pas infinie et qu'une erreur e sur la mesure des durées est toujours possible, on donnera en fait, au message, une durée comprise entre 240+e et 360−e.

Dans l'exemple qui précède, le serveur et le demandeur sont situés dans la même zone locale. Mais l'invention s'applique naturellement au cas où l'abonné demandeur est situé dans une autre zone que celle du serveur. C'est ce qui va être examiné maintenant, en liaison avec la partie gauche du schéma de la figure 2.

Sur cette partie sont représentées trois zones, la première comportant un centre de rattachement $CR_1$ dont les abonnés sont notés $A_1$, la deuxième un centre de rattachement $CR_2$ dont les abonnés sont notés $A_2$ et un centre de transit $CT_2$, et une troisième avec un centre de rattachement $CR_3$, des abonnés $A_3$ et un centre de transit $CT_3$. Ces différentes zones ont accès à la zone locale où se trouve le serveur à travers les centres de transit CT, $CT_1$ et $CT_2$. Ces communications avec la zone locale font l'objet d'une taxation à la durée, dont les paliers normaux sont respectivement $T_1$, $T_2$, $T_3$. Une précaution doit être prise dans le cas où certains de ces paliers sont inférieurs à la période qui sert de base pour la détermination de la durée du message.

De façon générale, si l'on désigne par n le nombre d'unités de taxation imputées normalement pour une communication de durée t, avec un palier de taxation T, on a:

$$n = 1 + \text{partie entière de } \left( \frac{t}{T} \right).$$

Si l'on désigne de même par m le nombre d'unités de taxation imputées à l'abonné ayant reçu le message, avec un palier de taxation T', on a:

$$m = 1 + \text{partie entière de } \left( \frac{t}{T'} \right).$$

On doit obtenir dans le second cas, et en accord avec l'invention, une surtaxe d'au moins une unité par rapport au premier, soit:

$$m \geqslant n + 1$$

Cette relation permet de définir le palier T' à prendre en compte ainsi que la durée t convenable du message. On doit avoir en effet:

$$\text{partie entière } \left( \frac{t}{T'} \right) \geqslant 1 + \text{partie entière de } \left( \frac{t}{T} \right).$$

Comme plusieurs zones de paliers Ti différents peuvent avoir accès au serveur, il existe en fait un système de telles inéquations qui permet de définir les paliers T'i (différents de Ti) pour les différentes zones ainsi que la durée t du message.

En fait, pour des durées Ti très courtes, le nombre d'unités de taxation ordinaires sera considéré comme prohibitif par les abonnés, qui renonceront alors à ce service. Par exemple, pour un palier de 12s et une durée de message de 240s, il y aurait 20 unités de taxation. En pratique donc, il ne faudra tenir compte que des paliers des zones proches de celle du serveur.

On observera que, dans les considérations qui précèdent, il faut distinguer les communications de jour de celles de nuit. Si le palier de nuit est le double du palier de jour, les paliers T'i devront être les paliers les plus longs, c'est-à-dire les paliers de nuit. La durée du message sera réglée pour que la surtaxe soit d'au moins une unité pour la nuit, et elle sera alors de deux unités pour le jour:

$$m_{nuit} = n_{nuit} + 1$$

$$\text{dinc } m_{jour} = n_{jour} + 2$$

avec $n_{nuit} = 1 +$ partie entière de $\left( \dfrac{t}{T} \right)$

$n_{jour} = 1 +$ partie entière de $\left( \dfrac{2t}{T} \right)$

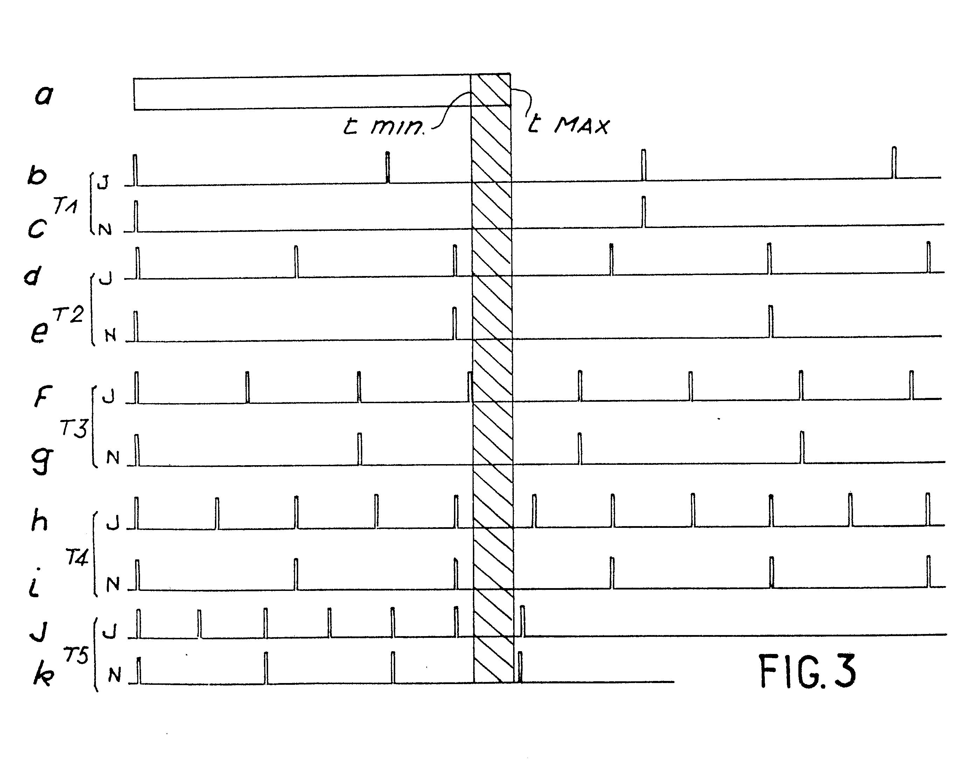

Ces questions peuvent être précisées sur des exemples et cela à l'aide de la figure 3, qui représente un diagramme de temps dans lequel:

– la ligne a représente un message de durée fixe comprise entre un minimum et un maximum,

– les lignes b et c montrent les impulsions de taxation pour un palier de durée $T_1$, respectivement pour le jour (J) et pour la nuit (N),

– les lignes d à k montrent ces mêmes impulsions pour des paliers de durées différentes à savoir:
  – les lignes d et e pour en palier $T_2$,
  – les lignes f et g pour un palier $T_3$,
  – les lignes h et i pour un palier $T_4$,
  – les lignes j et k pour un palier $T_5$.

Le tableau ci-dessous permet de comprendre les différents cas illustrés sur le diagramme de la figure 3. La première colonne donne le type d'abonné demandeur: $A'_L$ et $A''_L$ sont les abonnés de la zone locale où est le serveur; les abonnés $A_1$, $A_2$, $A_3$ sont les demandeurs situés hors de cette zone locale. La seconde colonne donne le palier de taxation lorsque l'abonné $A_L$ est demandé, $A_L$ étant rattaché au même centre CR que le serveur. (Si $A'_L$ ou $A''_L$ appelent $A_L$, la taxation n'est pas à la durée mais à la communication). La troisième colonne donne le palier de taxation dans le cas où le serveur est appelé. Pour les abonnés $A'_L$ et $A''_L$, ce palier est $T_2$, ce qui permet, de nuit (voir ligne (e) de la figure 3) d'avoir la surtaxe d'une unité souhaitée. Le palier $T_1$ ne conviendrait pas, car, de nuit, il n'y aurait pas de surtaxe. Les quatre dernières colonnes indiquent, dans chaque cas, le nombre d'unités de taxation, ou taxes de base (TB), dues lorsque le demandé est soit un abonné $A_L$ de jour, soit le serveur de jour, soit un abonné $A_L$ de nuit, soit enfin le serveur de nuit. On voit que si l'on veut toujours obtenir une surtaxe d'au moins une unité entre le nombre da taxes correspondant au serveur de nuit (dernière colonne) et le nombre de taxes correspondant à l'abonné $A_L$ de nuit (avant-dernière colonne) il faut choisir des paliers de taxation du service qui ne sont pas nécessairement les paliers de taxation pour des appels des abonnés $A_L$. Ainsi, pour des abonnés $A_3$, soumis à un palier $T_3$ lorsqu'ils appellent un $A_L$, il faudra utiliser un palier $T_4$ (ou $T_5$) lorsqu'ils appellent le serveur (lignes pénultième et antépénultième du tableau). Si la durée choisie est trop courte, ou si elle est une contrainte qui limite trop sévèrement la durée du message, on peut exclure les abonnés $A_3$ du service en ne déclarant pas le BPQ du serveur au central de cette zone (dernière ligne du tableau).

Naturellement, dans ce qui précède, le fait que la surtaxe due au service d'information est égale à une unité de taxation la nuit et deux unités le jour, n'est qu'un exemple, et on pourrait choisir une surtaxe plus importante sans sortir du cadre de l'invention.

Il va de soi également que l'invention s'applique à tout réseau téléphonique commuté, quelles qu'en soient la nature, l'architecture ou l'organisation.

| Abonné demandeur | $A_L$ demandé | Serveur | $A_L$ jour | Serveur jour | $A_L$ nuit | Serveur nuit |
|---|---|---|---|---|---|---|
| $A'_L$ | (locale) | $T_2$ | 1TB | 3TB | 1TB | 2TB |
| $A''_L$ | (locale) | $T_2$ | 1TB | 3TB | 1TB | 2TB |
| $A_1$ | $T_1$ | $T_3$ | 2TB | 4TB | 1TB | 2TB |
| $A_2$ | $T_2$ | $T_4$ | 3TB | 5TB | 2TB | 3TB |
| $A_3$ | $T_3$ | $\{T_4$ | 4TB | 5TB | 2TB | 3TB |
| $A_3$ | $T_3$ | $\{T_5$ | 4TB | 6TB | 2TB | 3TB |
| $A_3$ | $T_3$ | BPQ non déclaré | 4TB | service non accessible | 2TB | Service non accessible |

**Revendications**

1. Procédé de taxation pour la vente d'informations à travers un réseau téléphonique dans lequel un serveur d'informations peut être mis en relation à travers ce réseau avec des abonnés demandeurs, ce serveur ayant un numero d'appel et possédant des moyens pour délivrer un message parlé, ce procédé étant caractérisé en ce que:

– le serveur délivre son message à tout abonné demandeur à partir de l'instant où il reçoit un appel de ce demandeur et la durée du message délivré par le serveur est fixe,

– on affecte à ce serveur un numéro qui, pour le réseau téléphonique, est réputé correspondre à une taxation à la durée sur la base d'un certain palier de taxation, ce numero impliquant en outre un acheminement de la communication à travers des moyens de taxation à la durée,

– on choisit la durée fixe du message et le palier de taxation de telle sorte que le montant de la taxation imputée à l'abonné demandeur pour la réception de la totalité du message comporte une surtaxe d'au moins une unité par rapport à la taxation qui lui aurait été imputée pour une communication de même durée avec un abonné qui appartiendrait à une même zone locale de distribution que le serveur,

— on compte le nombre d'appels auxquels le serveur a répondu et on en déduit le nombre de surtaxes imputées et ainsi la part des taxes perçues qui correspond à la rétribution du serveur.

2. Procédé selon la revendication 1, dans lequel l'accès au serveur est possible non seulement aux abonnés appartenant à la même zone locale que le serveur, mais encore aux abonnés appartenant à d'autres zones pour lesquelles le palier normal servant à la taxation à la durée est inférieur à celui correspondant à la zone du seveur, la durée du message et le palier réel de taxation à l'égard du serveur étant choisies pour que la taxation due à la transmission du message contienne une surtaxe d'au moins une unité.

3. Procédé selon l'une quelconque des revendications 1 et 2, dans lequel la taxation à la durée est basée sur un palier de jour et un palier de nuit, le palier de nuit étant plus long que le palier de jour, la durée du message étant au moins égale au palier de nuit.

**Patentansprüche**

1. Verfahren zur Berechnung von Gebühren für den Verkauf von Informationen über ein Telefonnetz, bei dem ein Informationsdienst über dieses Netz mit anrufenden Teilnehmern in Beziehung treten kann, wobei dieser Dienst eine Rufnummer hat und Mittel zum Abgeben einer gesprochenen Mitteilung besitzt, wobei dieses Verfahren dadurch gekennzeichnet ist, dass:

— der Dienst seine Mitteilung jedem anrufenden Teilnehmer von dem Moment an gibt, in dem er einen Anruf dieses Teilnehmers erhält, und die Länge der von dem Dienst gegebenen Mitteilung ist fest,

— man diesem Dienst eine Nummer zuordnet, die für das Telefonnetz als eine solche gilt, die einer Gebührenberechnung entsprechend der Dauer aufgrund einer gewissen Gebührenstufe entspricht, wobei diese Nummer ferner eine Leitung der Verbindung über Mittel zur Gebührenberechnung nach der Dauer bewirkt,

— man die feste Dauer der Mitteilung und die Gebührenstufe derart festlegt, dass die dem anrufenden Teilnehmer auferlegte Gebührenhöhe für den Empfang der gesamten Mitteilung eine Zuschlagsgebühr von wenigstens einer Einheit in Bezug auf die Gebühr umfasst, die ihm bei einer Verbindung der gleichen Dauer mit einem Teilnehmer berechnet worden wäre, der einen gleichen Ortsnetzbereich wie der Dienst angehört,

— man die Anzahl der Anrufe zählt, auf die der Dienst geantwortet hat und man davon die Anzahl der berechneten Zuschlaggebühren und somit den Teil der erhobenen Gebühren abzieht, der der Vergütung für den Dienst entspricht.

2. Verfahren nach Anspruch 1, bei dem der Zugang zu dem Dienst nicht nur den Teilnehmern, die zu dem gleichen Ortsbereich wie der Dienst gehören, sondern auch Teilnehmern möglich ist, die zu anderen Ortsbereichen gehören, bei denen die normale Stufe, die der Gebührenberechnung nach der Dauer dient, niedriger als diejenige ist, die dem Bereich des Dienstes entspricht, und bei dem die Dauer der Mitteilung und die tatsächliche Gebührenberechnungsstufe in Bezug auf den Dienst so gewählt sind, dass die für die Übertragung der Mitteilung fällige Gebührenberechnung eine Zuschlagsgebühr von wenigstens einer Einheit enthält.

3. Verfahren nach Anspruch 1 oder 2, bei dem die Gebührenberechnung nach der Dauer auf einer Tagstufe und einer Nachtstufe basiert, die Nachtstufe länger als die Tagstufe ist und die Dauer der Mitteilung wenigstens gleich der Nachtstufe ist.

**Claims**

1. Method of charging for the sale of information through a telephone network, in which an information server can be put in communication with requesting subscribers via this network, this server having a call number and possessing means for delivering a spoken message, this method being characterized in that:

— the server delivers its message to any requesting subscriber from the moment when it receives a call from this requesting subscriber, and the duration of the message delivered by the server is fixed,

— this server is assigned a number which, for the telephone network, is deemed to correspond to a charge for duration based on a certain unit-charge period, this number also involving a routing of the call through means of charging the duration,

— the fixed duration of the message and the unit-charge period are selected in such a way that the amount of the charge made to the requesting subscriber for receiving the entire message includes a surcharge of at least one unit relative to the charge which would have been made to him for a call of the same duration to a subscriber belonging to the same local call area as the server,

— the number of calls which the server has answered is counted, and from this are deduced the number of surcharges made and thus the share of the collected charges which corresponds to the remuneration of the server.

2. Method according to Claim 1, in which access to the server is possible not only for subscribers belonging to the same local area as the server, but also for subscribers belonging to other areas where the standard unit period used for charging for duration is less than that corresponding to the area of the server, the duration of the message and the actual unit-charge period in respect of the server being selected so that the charge for the transmission of the message contains a surcharge of at least one unit.

3. Method according to either of Claims 1 and

2, in which the charge for duration is based on a day-time unit-charge period and a night-time unit-charge period, the night-time period being longer than the day-time period and the duration of the message being at least equal to the night time period.

FIG.1

0 117 181

FIG.2

FIG.3